# EUROPEAN PATENT SPECIFICATION

(11) **EP 3 226 239 B1**
(45) Date of publication and mention of the grant of the patent: **19.12.2018**
(21) Application number: 16162749.2
(22) Date of filing: 30.03.2016
(51) Int. Cl.: G10L 15/06, G10L 15/18, G10L 15/26, G10L 15/30, B60R 16/037

(54) **VOICE COMMAND SYSTEM**
SPRACHSTEUERUNGSSYSTEM
SYSTÈME DE COMMANDE VOCALE

(43) Date of publication of application: 04.10.2017
(73) Proprietor: Panasonic Automotive & Industrial Systems Europe GmbH, 63225 Langen (DE)
(72) Inventor: HAGE, Marwan, 63225 Langen (DE)
(74) Representative: Grünecker Patent- und Rechtsanwälte PartG mbB

(56) References cited:
- WO-A1-01/08135
- US-A1- 2014 244 263
- US-A1- 2014 278 413
- US-A1- 2015 187 352

## Description

### FIELD OF THE INVENTION

The present invention relates to voice recognition based speech dialogue systems. More specifically, the present invention relates to voice recognition based speech dialogue systems capable of recognizing a limited number of terms such as commands for triggering an action over speech.

### BACKGROUND ART

Speech recognition systems, also known as voice recognition systems, have become widespread in recent years for performing tasks, wherein certain actions are to be triggered by means of speech input (rather than conventional input to a computer system such as by means of a keyboard, or of operating other input devices known in the art such as a mouse, a touch sensitive panel, a touch screen or various specifically designed operating elements such as hardware buttons). An exemplary speech recognition system is disclosed in US 2014/0278413 A1.

A particularly sophisticated kind of speech recognition system is, for instance, automatic speech recognition systems (ASR) with dictation support. Such systems are capable of recognizing any sentence input by the user by means of speech such as through a microphone in a headset, and are used, for instance, to provide an automated dictation system, wherein a user can dictate a text to be input in a conventional text processing system of a computer in real time, instead of being typed through a keyboard. Such systems require a considerable amount of both processing capacity and database capacity, for storing a large amount of terms known to a language in which the system is based (i.e. a dictionary) as well as for performing a sophisticated analysis of any speech input of a user. Typically, such speech recognition systems are further capable of performing "learning by doing", i.e. they can be "trained on the job", when a user enters a previously unknown term and associates same with his respective utterance, thereby adding new terms to the dictionary, i.e. enhancing the database of terms. Also, it is common in such systems to have user profiles reflecting the stylistic peculiarities of individual users.

On the other hand, as indicated, such systems require large memory and processing capacities, which may, moreover, lead to a certain delay in processing.

Therefore, such sophisticated systems are only of limited value in situations wherein, on the one hand, processing and memory capacity is limited, but on the other hand, there is no need for the system to understand each and every possible sentence spoken by a person in a particular natural language, while it is sufficient to understand only a rather limited amount of different kinds of user input, related to a limited number of actions associated with said input.

Such a situation prevails, for instance, in the case of electronic appliances that support a function of being controlled by means of voice control. One important field of application of voice control of the kind as outlined is within vehicles. Since the driver of a vehicle has only a limited possibility to perform operations other than those directly related to the actual driving with his or her hands, he or she welcomes the opportunity to control predetermined subsidiary functions such as the functions of an infotainment system by means of voice control. However, the field of application of voice control is not limited to the latter situation, i.e. vehicles. For instance, it is possible to perform voice control of home appliances such as radio or television devices, electronic toys and others. Also, it is a particular field of application thereof to assist visually impaired users in operating electronic devices.

In order to perform voice recognition based control tasks of limited scope such as outlined above, it is therefore common to use less sophisticated systems. Such systems are not capable of recognizing every sentence of a user input by speech, but only a limited number of predefined input text samples, each expressing a predefined task or command to a device. Typically, such specific systems are "embedded" in the device itself, and are therefore known as "embedded ASR".

In conventional voice recognition systems of said kind (speech dialogue systems), a user must therefore learn which particular text elements (spoken commands) are predefined in the system and can therefore be understood for triggering predetermined actions. A list of such commands is normally provided in the manual of the device (for example in a car, it will be listed in the car handbook). It therefore often happens that a user forgets which command is needed, and so has no chance to be understood by the system. The user may therefore become frustrated and refrain from using voice control any more.

One way of overcoming such a problem is a new technology called "Natural Language Understanding (NLU)" which was introduced approximately 5 years ago. In accordance therewith, in order to enable a larger variety of individual means in which speech commands for triggering one and the same task may be issued, the system developer has to interview a lot of different people (in the range of hundreds) in order to collect various expressions a user may employ for speech input. For example, in case the user wants to make a phone call to John, the user might say "call John", "get me John on the phone", "where is John",.... Again, such a process is rather costly and has enhanced database requirements. Moreover, even with such an approach 100% success is not guaranteed. Since the number of interview partners used during the development process is nevertheless limited, there might still be users who have a rather different way of talking which will not be understood.

### SUMMARY OF THE INVENTION

The present invention aims to overcome the drawbacks of the prior art outlined above and to provide an improved speech dialogue apparatus having only limited hardware requirements so as to be embedded in an electronic appliance, but which nevertheless provides considerable flexibility for a user to perform certain tasks by means of voice control, and a method of training such an apparatus.

This is achieved by the features of the independent claims.

According to a first aspect of the present invention, a speech dialogue apparatus adapted to operate in a training mode is provided. The speech dialogue apparatus comprises a text database storing a plurality of initial text elements which the speech dialogue apparatus is capable of recognizing from input speech. The speech dialogue apparatus further comprises a query module for outputting, in said training mode, a query to a user for inputting, by means of speech, at least one synonym the user intends to use for a particular one of the initial text elements stored in the text database. Further, the speech dialogue apparatus comprises a query response receiving module for receiving the at least one synonym input by the user by means of speech and a query response forwarding module for forwarding the received at least one synonym to a speech recognition system. Still further, the speech dialogue apparatus comprises a synonym text element receiving module for receiving at least one synonym text element that has been recognized by the speech recognition system from the at least one synonym input by the user by means of speech and a synonym text element associating module for storing the at least one synonym text element in the text database so as to be associated with the particular one of the initial text elements.

According to a second aspect of the present invention, a method performed by a speech dialogue apparatus operating in a training mode is provided. The speech dialogue apparatus comprises a text database storing a plurality of initial text elements which the speech dialogue apparatus is capable of recognizing from input speech. The method comprises the steps of outputting a query to a user for inputting, by means of speech, at least one synonym the user intends to use for a particular one of the initial text elements stored in the text database, receiving the at least one synonym input by the user by means of speech, forwarding the received at least one synonym to a speech recognition system, receiving at least one synonym text element that has been recognized by the speech recognition system from the at least one synonym input by the user by means of speech, and storing the at least one synonym text element in the text database so as to be associated with the particular one of the initial text elements.

In accordance with a further particular aspect of the present invention, a computer program product including computer readable program code for causing a computer to perform all steps of a method according to the second aspect of the present invention, when loaded to the computer, is provided. Thus, the present invention can be implemented, besides dedicated hardware, also in form of software (Voice Recognition - VR software) running on a computer such as an on-board vehicle computer.

It is the particular approach of the present invention that a voice (speech) recognition based speech dialogue apparatus which is only capable of recognizing a limited number of text templates that it already knows ("initial text elements" such as keywords representing predetermined commands) provides the user with a training mode, in which the user can teach the apparatus his or her personal manner how to express the contents of said text templates. In other words, the speech dialogue apparatus of the present invention is capable of being "personalized" by a user. Additional text templates that a user inputs as synonymous to the initial text elements are added to the database of recognizable text templates, in association with the respective initial text elements, after the user's respective speech input has been forwarded to and recognized by an ASR system with dictation support. Subsequently, the apparatus is capable of recognizing the additional text templates when spoken by a user and triggering the same action based thereon, as if the associated initial text element were spoken.

So, in accordance with the present invention, the term "initial text element" means a text element (keyword, phrase, etc.) that is pre-stored in the text database, before an operation in the training mode is started.

Preferably, the initial text elements represent commands for triggering some action over speech. As indicated above, voice control commands are a particular field of application of "lean" speech recognition systems with a limited vocabulary.

Further preferably, the speech dialogue apparatus is arranged in a vehicle, and the commands are commands for operating functions of electronic equipment available in the vehicle. More preferably, commands to be controlled by means of voice recognition in an automotive system (vehicle) are those in the telephone communication domain (phone somebody or send an SMS to a person), or the Media domain (infotainment system).

Also preferably, the speech recognition system is an external speech recognition system. Since the voice recognition system in the vehicle has only limited capacity, and is thus not capable of recognizing everything the user says, the respective functionality is performed externally by a more sophisticated and capable voice recognition system which has dictation support, i.e. the external speech recognition system. The speech input received from the user upon the query for synonyms is recorded and transmitted to the external speech recognition system, by means of wireless communication such as according to each known or emerging in the future suitable standard of mobile communication, in form of a known audio format such as PCM speech or WAVE. By means of the same (or a different) wireless communication system, the result of the speech recognition at the external ASR system is retransmitted to the speech dialogue apparatus, such as a speech dialogue apparatus of a car infotainment system. More preferably, the external speech recognition system is a cloud-based automatic speech recognition system.

Preferably, the speech dialogue apparatus further comprises a user profile database for maintaining a plurality of user profiles. The processing of the training mode is performed under a particular one of the user profiles corresponding to the user. Before performing the operation for training the speech dialogue apparatus, a user logs in under his user profile. As a consequence, it is possible to store the respective synonym text elements to an initial text element in the text database so as to be further associated with the user profile. In other words, there may be provided a plurality of lists, each for an individual user (profile), of different individual synonym expressions to a given initial text element. Thus, the apparatus can be personalized for a plurality of users (such as different drivers of a particular car), at the same time.

The user database may be provided separately from the text database, or both databases can be provided within different portions of a single physical database.

Preferably, the speech dialogue apparatus is included in a car infotainment system.

In accordance with a preferred embodiment, the query is output by means of computer-generated speech output. Alternatively, the query may be output by means of pre-recorded speech of a natural person, or in a visual manner such as on a display.

Further features and advantages of the present invention are the subject matter of dependent claims.

### BRIEF DESCRIPTION OF THE DRAWINGS

Additional features and advantages of the present invention will become apparent in the following and more particular description as illustrated in the accompanying drawings, wherein:

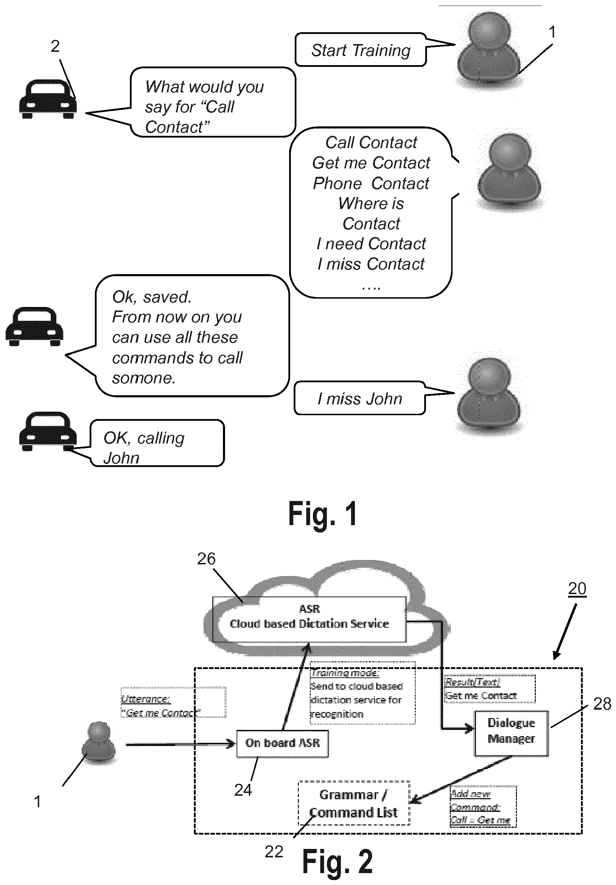

- Fig. 1: provides a simplified example of a dialogue between a speech dialogue apparatus according to the present invention and a user for querying alternatives intended to be used by said user for a given version of a command (initial text element);
- Fig. 2: schematically provides an overview of the architecture of a speech dialogue apparatus according to an embodiment of the present invention and the interactions thereof with a user and a cloud-based dictation service, as any external automatic speech recognition system with dictation support;

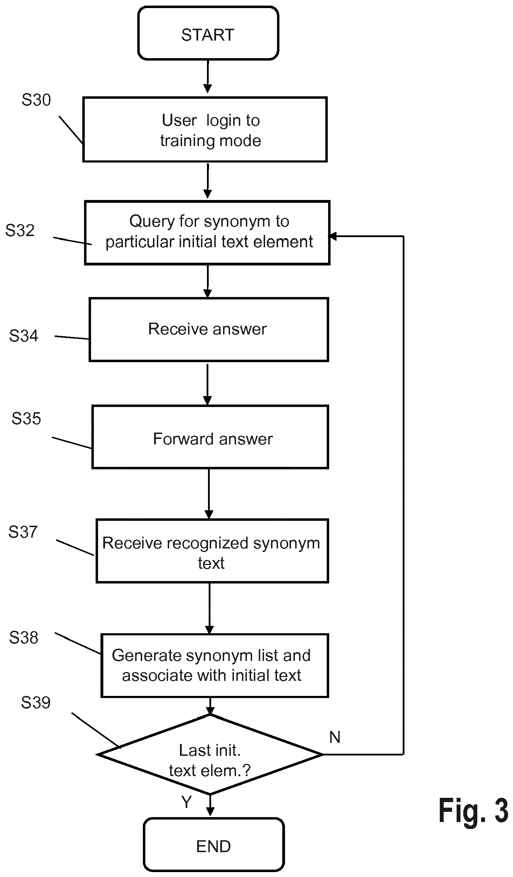

- Fig. 3: is a flowchart illustrating a process performed in a training mode of a speech dialogue apparatus according to an embodiment of the present invention;

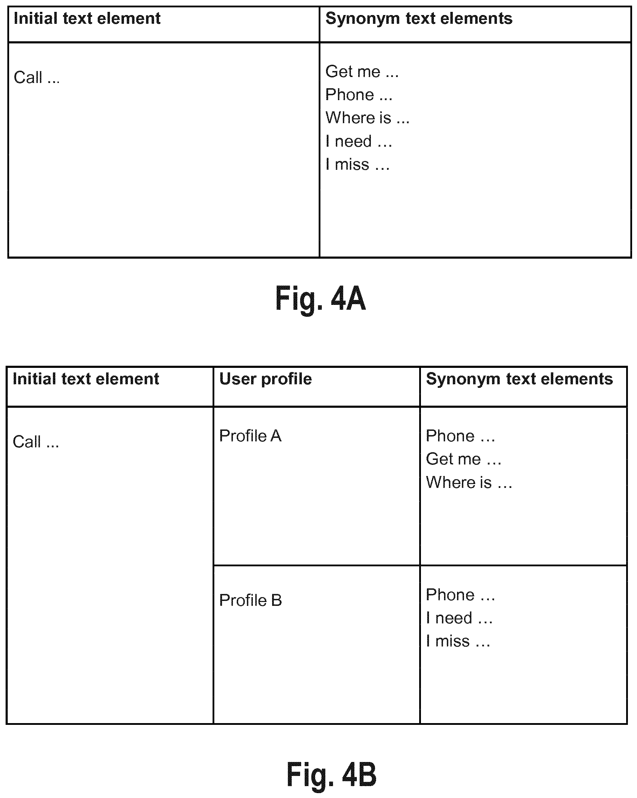

- Fig. 4A: provides an example of a list of synonymous commands (synonymous text elements) added to an initially available command (initial text element) in an operation in a training mode of a speech dialogue apparatus according to an embodiment of the present invention, wherein no individual user profiles are used; and
- Fig. 4B: provides an example of a list of synonymous commands (synonymous text elements) added to an initially available command (initial text element) in an operation in a training mode of a speech dialogue apparatus according to an embodiment of the present invention, supporting individual user profiles.

### DETAILED DESCRIPTION

The present invention provides a method and apparatus for personalizing a speech dialogue system, in particular for voice-controlled commands in a vehicle. Specifically, the invention provides a possibility for a user to use synonyms/alternatives for existing commands in the system.

The basic idea underlying the present invention is to provide a user with the possibility to design the commands as he/she likes them. The speech dialogue apparatus/VR software provides the user with a training dialogue wherein the user is asked for his favourite terms for expressing certain commands.

A simple example is given in Fig. 1 for a dialogue to be performed in the training mode between the user and the speech dialogue apparatus according to the present invention, in order to add synonyms/alternatives for a specific initially stored command (initial text element). Although Fig. 1 illustrates a car 2 as an example of a system, wherein the speech dialogue apparatus according to the invention can be implemented, the present invention is not limited to voice control in cars. Instead, any device which has a speech recognition apparatus or a computer with running VR software thereon, could be illustrated.

In the given example, it is assumed that synonyms preferred by a user are to be determined for a command, wherein the user wants to establish a phone call to a particular person (represented by the anonymous word "contact"). After starting a training session, the speech dialogue apparatus in the vehicle 2 asks the user 1 "What would you say for "Call Contact"? (or asks a similar question, such as, for example "What kind of sentence would you like to use if you want to call a contact?").

Subsequently, the user 1 provides a plurality of possible synonyms for the initial text element "Call Contact" that he intends to use for voice control of the telephone function in his/her vehicle. In accordance with the non-limiting exemplary embodiment, such synonyms may, for instance, include "Get me Contact", "Phone Contact", "Where is Contact", "I need Contact", "I miss Contact", etc. in addition to the initial "Call Contact". After various steps (described below with reference to Fig. 3) have been performed by the apparatus without user interference, the speech dialogue apparatus informs the user: "Ok, saved. From now on you can use all these commands to call someone." Thereby, the training session, i.e. the operation of the training mode, finishes.

Further, the lower portion of Fig. 1 illustrates a dialogue that is performed already after the training session has been finished, given in the example of the normal operation of voice-controlled functionality by means of the speech dialogue apparatus. Specifically, the user 1 desires to call a person named John. In accordance with the last alternative illustrated in the figure and listed above ("I miss ..."), the user replaces the anonymous word "Contact" with "John", thus saying "I miss John". The system in the car recognizes the command as triggering the action of calling John on the telephone and acts accordingly. A skilled person is aware that the respective telephone number associated with John has to be stored in advance in a system database.

Of course, training operation according to the present invention is not limited to the given example. Other possible situations, wherein commands generated in accordance with the present invention can be applied are, for instance, instructions for sending an SMS to a known contact, or instructions in the media domain like "play Michael Jackson" or "Skip Song"

The training session illustrated in the upper portion of Fig. 1 should be enabled by the user during set up of the speech dialogue apparatus for the first time. Of course, it is not excluded to start another training session at a later time, in order to further extend the database of synonyms or alternatives.

Thus, by means of a training session such as the illustrated one, the user can design his or her own commands which he or she will not forget. Such a process may be called "Personalized Language Understanding (PLU)".

Fig. 2 provides an architecture overview showing how the main components interact with each other, in a specific embodiment of the present invention.

A speech dialogue apparatus 20 (indicated by a dashed line) according to the illustrated embodiment of the present invention comprises at least an on-board ASR module 24 (preferably a simple module without dictation support), which acts as a query response receiving module and a query response forwarding module according to the first aspect of the present invention. The apparatus 20 further comprises a grammar/command list 22, representing the text database according to the present invention and a dialogue manager 28 representing a synonym text element receiving module and a synonym text element associating module. Speech dialogue apparatus 20 interacts with a speech recognition system. In the illustrated example, this is a cloud-based dictation service 26. Said component, which is external to the actual speech dialogue apparatus 20, has full dictation support functionality and is therefore capable of recognizing a newly input synonym, which is unknown to the speech dialogue apparatus 20 in the initial status, i.e. before the training session.

In accordance with a specific example of operation illustrated in Fig. 2, after entering a training session, and being queried for alternatives (synonyms) for a particular initial text element (in this case "Call Contact"), the user 1 can speak an alternative for a specific command (in this case the user 1 speaks "Get me Contact" as an alternative for "Call Contact"). As discussed above, with reference to Fig. 1, the user should answer the question with at least one synonym, as in Fig. 2, but may also provide a plurality of synonyms. The response to the query is forwarded to an on-board ASR (embedded ASR) 24. Since the capabilities of the embedded ASR 24 are limited (i.e. the embedded ASR 24 can only recognize commands which it already knows), in the present exemplary case it is only able to recognize "Call Contact" but not the new sentence which the user provides to be added: "Get me Contact". Therefore, during the training session the embedded ASR module 24 uses a cloud based ASR 26 which has dictation support. More specifically, the on-board ASR 24 sends the received speech to the ASR of the cloud-based dictation service 26. Since the cloud-based ASR has dictation support, it can recognize any sentence which the user has input by means of speech (of course within the framework of the same language that the dictation supports). Once the cloud-based dictation service 26 recognizes the spoken sentence and returns it as a text, in this case "Get me Contact", to the device (more specifically: to dialogue manager 28), the dialogue manager 28 which controls the dialogue flow and has the business logic adds this sentence as an alternative for the initial command "Call" to the database (grammar/command list 22), after extracting the word contact from the online recognized sentence.

Consequently, now the speech dialogue apparatus 20 can recognize the sentence "Get me Contact" and is capable of mapping it to a specific action (calling the contact).

It has to be noted that the present invention is not limited to an external, or more specifically, to a cloud based speech recognition system, which is capable of recognizing any synonyms newly input by a user. The invention is equally applicable to a case, wherein a synonym text element is associated with a pre-stored initial text element after having been recognized by a speech recognition system having the respective capability and being located within the speech dialogue apparatus.

Fig. 3 is a flowchart illustrating an exemplary process performed by an apparatus/method in accordance with the present invention during a training session.

After initialising a training session, the user 1 logs in to the training mode (step S30). Specifically, the user may log in in accordance with a particular user profile that has been created and is maintained in the database for said particular user. However, the present invention is equally applicable to a situation where there are no specific user profiles. Also, it is possible to skip the step of user login, such as in a situation where there is only a single user with access to the speech dialogue system.

In subsequent step S32, the speech dialogue apparatus 20 sends out a query for synonyms to a particular pre-stored initial text element. The user recognizes the query (output in visual or audio form) and replies with one or more synonyms he or she intends to use. The respective answer including the speech data of the synonyms is received at the speech dialogue apparatus 20 in step S34 and forwarded to the speech recognition system 26, preferably an external speech recognition system, in the following step S35. Said forwarding is preferably performed by means of wireless communication, and the speech data are included, for instance, in a PCM or WAVE file. The speech recognition system 26 recognizes the received speech data, analyses them and extracts the respective text information (synonym text element(s)). Said text information is sent back and received at the speech dialogue apparatus 20 at step S37. The speech dialogue apparatus 20 generates, on the basis of the received text information, a list of synonyms and associates same with the initial text element, in step S38.

Preferably, during a training session the operation in accordance with steps S32 to S38 is repetitively performed for each initial text element stored in the database (such as each of a plurality of commands which are available in the particular system). Therefore, in step S39 it is checked, whether there are remaining initial text elements in the text database, for which no training mode operation has been performed yet. If this is the case (S39: N), the processing returns to step S32, wherein the query is performed for the next initial text element. When the operation of the training session has been performed for the last of the initially stored text elements (S39: Y), the operation of the training session finishes.

Fig. 4 illustrates different examples of lists, wherein synonymous text elements are associated in the database with a particular text element (in the illustrated case: "Call ...").

More specifically, Fig. 4A relates to a case wherein no individual user profiles are defined and maintained in the database. In this case, only a single list of synonymous text elements is associated with the given initial text element. In the illustrated example, the list comprises the expressions "Get me ...", "Phone ...", "Where is ...", "I need ..." and "I miss ...".

Fig. 4B relates to a case wherein individual user profiles are present. Specifically, the illustrated table shows user profiles "Profile A" and "Profile B". For the initial text element "Call ...", separate individual lists of synonymous text elements are provided. Specifically, the list of synonyms for "Profile A" includes the text elements "Phone ...", "Get me ...", and "Where is ...". In contrast, the list for "Profile B" includes the text elements "Phone ...", "I need ...", and "I miss

In other words, while "Phone ..." is a valid synonym for both users having logged on under "Profile A" and "Profile B", there are further individual synonyms which are valid only for a single one of the user profiles. Thus, the operation can be more individually customised and simplified, in case a particular user is logged on.

In summary, the present invention relates to an improved speech dialogue system for voice command control of electronic appliances such as in a vehicle. Language understanding can be personalized, and thereby it is possible to enable a flexible variety of commands a particular user employs, despite the fact that the voice control system is actually only capable of recognizing and supporting a limited number of pre-stored text templates (commands). For said purpose, a training mode is provided wherein a new version of the command (synonym) is analyzed and recognized with the help of an external component having dictation support. Any synonyms are stored in association with an initial text element (command).

## Claims

1. A speech dialogue apparatus adapted to operate in a training mode, said speech dialogue apparatus comprising:
a text database (22) storing a plurality of initial text elements which the speech dialogue apparatus is capable of recognizing from input speech,
a query module for outputting, in said training mode, a query to a user (1) for inputting, by means of speech, at least one synonym the user (1) intends to use for a particular one of the initial text elements stored in the text database (22),
a query response receiving module (24) for receiving said at least one synonym input by the user (1) by means of speech,
a query response forwarding module (24) for forwarding said received at least one synonym to a speech recognition system (26),
a synonym text element receiving module (28) for receiving at least one synonym text element that has been recognized by the speech recognition system (26) from said at least one synonym input by the user (1) by means of speech, and
a synonym text element associating module (28) for storing said at least one synonym text element in said text database (22) so as to be associated with said particular one of the initial text elements.

2. A speech dialogue apparatus according to claim 1, wherein said initial text elements stored in said text database (22) represent commands for triggering some action over speech.

3. A speech dialogue apparatus according to claim 2 for being arranged in a vehicle (2), wherein said commands are commands for operating functions of electronic equipment available in said vehicle (2).

4. A speech dialogue apparatus according to any of claims 1 to 3, wherein said speech recognition system (26) is an external speech recognition system.

5. A speech dialogue apparatus according to claim 4, wherein said external speech recognition system (26) is a cloud based automatic speech recognition system.

6. A speech dialogue apparatus according to any of claims 1 to 5,
further comprising a user profile database for maintaining a plurality of user profiles,
wherein the processing of said training mode is performed under a particular one of said user profiles corresponding to said user (1), and
said at least one synonym text element is stored in the text database (22) so as to be further associated with said user profile.

7. A speech dialogue apparatus according to any of claims 1 to 6, included in a car infotainment system.

8. A method performed by a speech dialogue apparatus (20) operating in a training mode, said speech dialogue apparatus (20) comprising a text database (22) storing a plurality of initial text elements which the speech dialogue apparatus (20) is capable of recognizing from input speech, the method comprising the steps of
outputting (S32) a query to a user (1) for inputting, by means of speech, at least one synonym the user (1) intends to use for a particular one of the initial text elements stored in the text database (22),
receiving (S34) said at least one synonym input by the user (1) by means of speech, forwarding (S35) said received at least one synonym to a speech recognition system (26),
receiving (S37) at least one synonym text element that has been recognized by the speech recognition system (26) from said at least one synonym input by the user (1) by means of speech, and
storing (S38) said at least one synonym text element in said text database (22) so as to be associated with said particular one of the initial text elements.

9. A method according to claim 8, wherein said initial text elements stored in said text database (22) represent commands for triggering some action over speech.

10. A method according to claim 9, wherein said speech dialogue apparatus (20) is arranged in a vehicle (2), wherein said commands are commands for operating functions of electronic equipment available in said vehicle (2).

11. A method according to any of claims 8 to 10, wherein said speech recognition system (26) is an external speech recognition system.

12. A method according to claim 11, wherein said external speech recognition system (26) is a cloud based automatic speech recognition system.

13. A method according to any of claims 8 to 12, wherein
said speech dialogue apparatus (20) further comprising a user profile database for maintaining a plurality of user profiles,
the steps of said method are performed after the user (1) has been logged in (S30) to the speech dialogue apparatus (20) under a particular one of said user profiles, and
said storing step (S38) stores said at least one synonym text element in the text database (22) so as to be further associated with said user profile.

14. A method according to any of claims 8 to 13, wherein said outputting step (S32) outputs said query by means of computer generated speech output.

15. A computer program product including computer readable program code for causing a computer to perform all steps of a method according to any of claims 8 to 14, when loaded to the computer.

## Patentansprüche

1. Sprachdialogvorrichtung, die ausgebildet ist, in einem Übungsmodus zu arbeiten, wobei die Sprachdialogvorrichtung aufweist:
eine Textdatenbank (22), die mehrere Anfangstextelemente speichert, die die Sprachdialogvorrichtung aus einer Spracheingabe erkennen kann,
ein Anfragemodul zur Ausgabe einer Anfrage an einen Benutzer (1) bezüglich einer Eingabe durch Sprache von mindestens einem Synonym im Übungsmodus, das der Benutzer (1) für ein spezielles der Anfangstextelemente, die in der Textdatenbank (22) gespeichert sind, zu verwenden beabsichtigt,
ein Anfrageantwortempfangsmodul (24) zum Empfangen des mindestens einen von dem Benutzer (1) mittels Sprache eingegebenen Synonyms,
ein Anfrageantwortweiterleitungsmodul (24) zur Weiterleitung des empfangenen mindestens einen Synonyms an ein Spracherkennungssystem (26),
ein Synonymtextelementempfangsmodul (28) zum Empfang mindestens eines Synonymtextelements, das von dem Spracherkennungssystem (26) aus dem mindestens einen von dem Benutzer (1) mittels Sprache eingegebenen Synonyms erkannt worden ist, und
ein Synonymtextelementzuordnungsmodul (28) zur Speicherung des mindestens einen Synonymtextelements in der Textdatenbank (22) derart, dass es dem Speziellen einen der Anfangstextelemente zugeordnet ist.

2. Sprachdialogvorrichtung nach Anspruch 1, wobei die in der Textdatenbank (22) gespeicherten Anfangstextelemente Befehle zum Auslösen einer gewissen Aktion mittels Sprache repräsentieren.

3. Sprachdialogvorrichtung nach Anspruch 2, die in einem Fahrzeug (2) montierbar ist, wobei die Befehle Befehle zum Aktivieren von Funktionen elektronischer Anlagen sind, die in dem Fahrzeug (2) verfügbar sind.

4. Sprachdialogvorrichtung nach einem der Ansprüche 1 bis 3, wobei das Spracherkennungssystem (26) ein externes Spracherkennungssystem ist.

5. Sprachdialogvorrichtung nach Anspruch 4, wobei das externe Spracherkennungssystem (26) ein automatisches Spracherkennungssystem auf Basis einer Cloud ist.

6. Sprachdialogvorrichtung nach einem der Ansprüche 1 bis 5,
die ferner eine Benutzerprofildatenbank zur Bewahrung mehrerer Benutzerprofile aufweist,
wobei die Verarbeitung in dem Trainingsmodus entsprechend einem speziellen Profil der Benutzerprofile, das dem Benutzer (1) zugeordnet ist, ausgeführt wird, und
das mindestens eine Synonymtextelement in der Textdatenbank (22) derart gespeichert ist, dass es ferner dem Benutzerprofil zugeordnet ist.

7. Sprachdialogvorrichtung nach einem der Ansprüche 1 bis 6, die in einem Fahrzeuginfotainmentsystem enthalten ist.

8. Verfahren, das von einer Sprachdialogvorrichtung (20), die in einem Übungsmodus arbeitet, ausgeführt wird, wobei die Sprachdialogvorrichtung (20) eine Textdatenbank (22), die mehrere Anfangstextelemente speichert, die die Sprachdialogvorrichtung (20) aus einer Spracheingabe erkennen kann, aufweist, wobei das Verfahren die Schritte umfasst
Ausgeben (S32) einer Anfrage an einen Benutzer (1) bezüglich einer Eingabe mittels Sprache von mindestens einem Synonym, das der Benutzer (1) beabsichtigt, für ein spezielles der Anfangstextelemente, die in der Textdatenbank (22) gespeichert sind, zu benutzen,
Empfangen (S34) des mindestens einen von dem Benutzer (1) durch Sprache eingegebenen Synonyms,
Weiterleiten (S35) des empfangenen mindestens einen Synonyms an ein Spracherkennungssystem (26),
Empfangen (S37) mindestens eines Synonymtextelements, das von dem Spracherkennungssystem (26) aus dem mindestens einem von dem Benutzer (1) durch Sprache eingegebenen Synonyms erkannt worden ist, und
Speichern (S38) des mindestens einen Synonymtextelements in der Textdatenbank (22) derart, dass es dem speziellen einen der Anfangstextelemente zugeordnet ist.

9. Verfahren nach Anspruch 8, wobei die in der Textdatenbank (22) gespeicherten Anfangstextelemente Befehle zum Auslösen einer gewissen Aktion durch Sprache repräsentieren.

10. Verfahren nach Anspruch 9, wobei die Sprachdialogvorrichtung (20) in einem Fahrzeug (2) angeordnet ist, und wobei die Befehle Befehle zum Aktivieren von Funktionen elektrischer Anlagen sind, die in dem Fahrzeug (2) verfügbar sind.

11. Verfahren nach einem der Ansprüche 8 bis 10, wobei das Spracherkennungssystem (26) ein externes Spracherkennungssystem ist.

12. Verfahren nach Anspruch 11, wobei das externe Spracherkennungssystem (26) ein automatisches Spracherkennungssystem auf Basis einer Cloud ist.

13. Verfahren nach einem der Ansprüche 8 bis 12, wobei
die Sprachdialogvorrichtung (20) eine Benutzerprofildatenbank zur Bewahrung mehrerer Benutzerprofile aufweist,
die Schritte des Verfahrens ausgeführt werden, nachdem der Benutzer (1) in der Sprachdialogvorrichtung (20) unter einem speziellen Profil der Benutzerprofile registriert worden ist (S30), und
der Speicherschritt (S38) mindestens ein Synonymtextelement in der Textdatenbank (22) derart speichert, dass es ebenfalls dem Benutzerprofil zugeordnet ist.

14. Verfahren nach einem der Ansprüche 8 bis 13, wobei der Ausgabeschritt (S32) die Anfrage mittels einer computererzeugten Sprachausgabe ausgibt.

15. Computerprogrammprodukt mit einem computerlesbaren Programmcode, der einen Computer veranlasst, alle Schritte eines Verfahrens nach einem der Ansprüche 8 bis 14 auszuführen, wenn er in den Computer geladen ist.

## Revendications

1. Dispositif de dialogue vocal adapté pour fonctionner dans un mode d'entraînement, ledit dispositif de dialogue vocal comprenant :
une base de données de texte (22) stockant une pluralité d'éléments de texte initiaux que le dispositif de dialogue vocal est capable de reconnaître à partir d'un énoncé d'entrée.
un module de demande pour produire, dans ledit mode d'entraînement, une demande destinée à un utilisateur (1) pour entrer, au moyen d'un énoncé, au moins un synonyme que l'utilisateur (1) envisage d'utiliser pour un particulier des éléments de texte initiaux stockés dans la base de données de texte (22),
un module de réception de réponse à une demande (24) pour recevoir ledit au moins un synonyme entré par l'utilisateur (1) par voie vocale,
un module de transmission de réponse à une demande (24) pour transmettre ledit au moins un synonyme reçu à un système de reconnaissance vocal (26),
un module de réception d'élément de texte synonyme (28) pour recevoir au moins un élément de texte synonyme qui a été reconnu par le système de reconnaissance vocale (26) à partir du dit au moins un synonyme entré par l'utilisateur (1) par voie vocale, et
un module d'association d'élément de texte synonyme (28) pour stocker ledit au moins un élément de texte synonyme dans ladite base de données de texte (22) de sorte à être associé au dit un particulier des éléments de texte initiaux.

2. Dispositif de dialogue vocal selon la revendication 1, dans lequel les dits éléments de texte initiaux stockés dans ladite base de données de texte (22) représentent des commandes pour déclencher une certaine action sur l'énoncé.

3. Dispositif de dialogue vocal selon la revendication 2 à installer dans un véhicule (2), dans lequel les dites commandes sont des commandes pour exploiter des fonctions d'un équipement électronique disponible dans ledit véhicule (2).

4. Dispositif de dialogue vocal selon l'une quelconque des revendications 1 à 3, dans lequel ledit système de reconnaissance vocale (26) est un système de reconnaissance vocale externe.

5. Dispositif de dialogue vocal selon la revendication 4, dans lequel ledit système de reconnaissance vocale externe (26) est un système de reconnaissance vocale automatique fondé sur le cloud.

6. Dispositif de dialogue vocal selon l'une quelconque des revendications 1 à 5,
comprenant en outre une base de données de profils d'utilisateur pour conserver une pluralité de profils d'utilisateur,
dans lequel le traitement du dit mode d'entraînement est effectué sous un particulier des dits profils d'utilisateur correspondant au dit utilisateur (1), et
ledit au moins un élément de texte synonyme est stocké dans la base de données de texte (22) de sorte à être en outre associé au dit profil d'utilisateur.

7. Dispositif de dialogue vocal selon l'une quelconque des revendications 1 à 6, inclus dans un système d'infodivertissement de voiture.

8. Procédé effectué par un dispositif de dialogue vocal (20) fonctionnant dans un mode d'entraînement, ledit dispositif de dialogue vocal (20) comprenant une base de données de texte (22) stockant une pluralité d'éléments de texte initiaux que le dispositif de dialogue vocal (20) est capable de reconnaître à partir d'un énoncé d'entrée, le procédé comprenant les étapes de
production (S32) d'une demande destinée à un utilisateur (1) pour entrer, au moyen d'un énoncé, au moins un synonyme que l'utilisateur (1) envisage d'utiliser pour un particulier des éléments de texte initiaux stockés dans la base de données de texte (22),
réception (S34) du dit au moins un synonyme entré par l'utilisateur (1) par voie vocale,
transmission (S35) du dit au moins un synonyme reçu à un système de reconnaissance vocal (26),
réception (S37) d'au moins un élément de texte synonyme qui a été reconnu par le système de reconnaissance vocale (26) à partir du dit au moins un synonyme entré par l'utilisateur (1) par voie vocale, et
stockage (S38) du dit au moins un élément de texte synonyme dans ladite base de données de texte (22) de sorte à être associé au dit un particulier des éléments de texte initiaux.

9. Procédé selon la revendication 8, dans lequel les dits éléments de texte initiaux stockés dans ladite base de données de texte (22) représentent des commandes pour déclencher une certaine action sur l'énoncé.

10. Procédé selon la revendication 9, dans lequel ledit dispositif de dialogue vocal (20) est installé dans un véhicule (2), dans lequel les dites commandes sont des commandes pour exploiter des fonctions d'un équipement électronique disponible dans ledit véhicule (2).

11. Procédé selon l'une quelconque des revendications 8 à 10, dans lequel ledit système de reconnaissance vocale (26) est un système de reconnaissance vocale externe.

12. Procédé selon la revendication 11, dans lequel ledit système de reconnaissance vocale externe (26) est un système de reconnaissance vocale automatique fondé sur le cloud.

13. Procédé selon l'une quelconque des revendications 8 à 12, dans lequel ledit dispositif de dialogue vocal (20) comprenant en outre une base de données de profils d'utilisateur pour conserver une pluralité de profils d'utilisateur,
les étapes du dit procédé sont effectuées après que l'utilisateur (1) s'est connecté (S30) au dispositif de dialogue vocal (20) sous un particulier des dits profils d'utilisateur, et
ladite étape de stockage (S38) stocke ledit au moins un élément de texte synonyme dans la base de données de texte (22) de sorte à être en outre associé au dit profil d'utilisateur.

14. Procédé selon l'une quelconque des revendications 8 à 13, dans lequel ladite étape de production (S32) produit ladite demande au moyen d'une sortie vocale générée par ordinateur.

15. Produit de programme informatique incluant un code de programme lisible par un ordinateur pour faire exécuter à un ordinateur toutes les étapes d'un procédé selon l'une quelconque des revendications 8 à 14, lorsque chargé sur l'ordinateur.
